# EUROPEAN PATENT APPLICATION

(11) **EP 2 560 357 A1**
(43) Date of publication of application: **20.02.2013**
(21) Application number: 11177610.0
(22) Date of filing: 15.08.2011
(51) Int. Cl.: H04M 3/51

(54) **Analysis of calls recorded at a call centre for selecting calls for agent evaluation**

(71) Applicant: University College Cork-National University of Ireland, Cork, Cork (IE)
(72) Inventor: Curran, Dara, Cork (IE); Sutton, Kevin, Cork (IE)
(74) Representative: O'Connor, Michael Donal

(57) **Abstract**

This invention relates to a method and system for selecting a call centre agent's call for evaluation. Presently, calls are selected at random for evaluation by the call centre team leader. Generally speaking, this is an inefficient way to choose the calls, is time consuming and can result in an unfair evaluation of the agent's performance. According to the present invention there is provided a method and system for selecting an agent's calls for evaluation which entails analysing each of the calls, extracting certain call audio features and using the extracted features to score the calls based on the call's features. Once the calls have been scored, they are clustered into groups of similarly-featured calls. In this way, calls that are typical and atypical of an agent's performance may be retrieved more reliably and faster than was heretofore the case. According to one particularly preferred embodiment, a selection of calls suitable for evaluation can be presented to the call centre team leader.

## Description

### Introduction

This invention relates to a method and system for selecting a call centre agent's call for evaluation.

It is generally accepted that it is good practice to frequently evaluate a call centre agent's performance. The evaluation is used to assess the agent's procedural adherence and friendless as well as a variety of other metrics. The evaluation can highlight deficiencies in the agent's knowledge or training and prompt the call centre management to take remedial action. It also enables the call centre management to monitor their staff's performance closely and improve the quality of service that they provide to their customers.

By and large, the evaluation is performed by a call centre team leader taking a sample of the call centre agents calls listening to each of the calls, choosing the most suitable calls for evaluation and assessing the call centre agent's performance. Typically, a call centre team leader will select a small sample of the agent's calls at random however it is not uncommon for the call centre team leader to avoid picking those calls that are longer than the usual call duration.

There are significant problems with the known methods of evaluating the call centre agent's performance that arise mainly as a consequence of the methods used to select the calls to evaluate. First of all, by avoiding picking longer calls, the call centre team leader is inadvertently prejudicing the efficacy of the evaluation. Secondly, according to the known methods, the sampling of calls is usually too small to provide a representative sample of typical calls for an agent and thus could lead to an unfair assessment of an agent's performance. Finally, the sampling methodology is also too small to reliably identify any unusual calls that require attention.

It is an object of the present invention to provide a method and a system for selecting a call centre agent's call for evaluation that overcome at least one of the above-mentioned problems.

### Statements of Invention

According to the invention there is provided a method of selecting a call centre agent call for evaluation comprising the steps of:
recording each of the calls handled by the call centre agent;
analysing each of the calls handled by the call centre agent and extracting at least one audio feature metric from the call:
retrieving at least one call centre metric relating to each of the calls;
scoring each of the analysed calls according to both their audio feature metric and their call centre metric in relation to other calls;
clustering the scored analysed calls; and
from the clustered scored analysed calls, selecting at least one of the calls suitable for evaluation.

By having such a method, all of the calls will be analysed and classified according to their type and content. By clustering all of the calls after analysis, those calls that are typical of the agents performance and those calls that are atypical of the agent's performance will be readily apparent and it will be possible to select with greater accuracy the type of call required for evaluation. This will significantly reduce the amount of time required to obtain calls that are useful for analysis. Secondly, the method according to the present invention will ensure that the calls used in the evaluation are more representative of the agent's overall performance and there is less chance of the agent being unfairly evaluated.

In one embodiment of the invention there is provided a method in which the step of selecting at least one of the calls suitable for evaluation comprises selecting a call from the clustered scored analysed calls that is typical of the agents calls. If desired, a list of calls taken from the clustered scored analysed calls that are typical of the agent's performance can be provided for evaluation which will give the call centre team leader a good indication of the agent's performance.

In one embodiment of the Invention there is provided a method in which the step of selecting at least one of the calls suitable for evaluation comprises selecting a call from the clustered scored analysed calls that is atypical of the agent's calls. By providing a call that is atypical of an agents call, it is possible to highlight those calls that were perhaps not handled in the regular manner and this can facilitate identifying unusual calls that require attention.

In one embodiment of the invention there is provided a method In which the step of scoring each of the analysed calls comprises applying a weighting to each of the audio feature metric and the call centre metric. By applying a weighting to the audio feature metric and the call centre metrics, those aspects of the calls that are more important and indicative of whether or not a problem may have arisen during the call can be given a greater weighting to highlight calls that prominently feature those metrics.

In one embodiment of the invention there is provided a method comprising the initial step of setting the weightings for the audio feature metric and the call centre metric. By having such a method, the call centre management can determine which metrics are the most important for them and which characteristics of the calls that they would like to identify. This will further provide a more effective method of identifying calls suitable for evaluation.

In one embodiment of the invention there is provided a method in which the step of scoring each of the analysed calls comprises calculating a Euclidean distance for each of the calls. By calculating the Euclidean distance, the call type can be represented very simply using a single distance measurement in the form of a numerical value.

In one embodiment of the invention there is provided a method In which the step of clustering the scored analysed calls comprises clustering the scored analysed calls according to the k-means algorithm with centroids selected according to the k-means++ algorithm.

In one embodiment of the invention there is provided a method comprising the additional intermediate step of plotting the clustered scored analysed calls and displaying the plotted clustered scored analysed calls. This is seen as a particularly useful embodiment of the present invention. By plotting the clustered scored analysed calls, the call centre team leader can visually inspect all of the calls that have been plotted and determine whether a call is an outlier (indicated by it being far from the centroid and therefore atypical) or whether the call is typical of the agents performance (indicated by it being proximal to the centroid) and the team leader can select calls for evaluation appropriately.

In one embodiment of the invention there is provided a method in which the clustered scored analysed calls are plotted at their Euclidean distance about a centroid.

In one embodiment of the invention there is provided a method in which the calls are clustered into three or more clusters.

In one embodiment of the invention there is provided a method comprising the steps of bookmarking a first call and thereafter retrieving a second call having a similar audio feature metric and call centre metric as the first call. This is seen as particularly useful as this will allow the team leader, having identified a call having particular characteristics, to monitor the subsequent calls made by the agent and see if a call with similar characteristics is made. This will allow the team leader to track behavioral patterns or potential items of interest to them such as an improvement in the agent's performance. Retrieving a second call having a similar audio feature metric and call centre metric as the first call can be achieved by selecting a call at or adjacent to the same Euclidean distance from the centroid as the first call or by selecting the call with lowest distance from the first call.

In one embodiment of the invention there is provided a method in which the step of extracting at least one audio feature metric from the call comprises extracting one or more of a volume distribution, a pitch distribution, a silences distribution, a speaker overlap measure, a speaker dominance measure, and a synchronized pitch and volume measure.

In one embodiment of the invention there is provided a method in which the step of retrieving at least one call centre metric relating to the call comprises retrieving one or more of a call duration, a hold duration, a call time of day, a call waiting time the number of breaks taken at the time of the call by the agent and how long the last break taken was.

In one embodiment of the invention there is provided a system for selecting a call centre agent call for evaluation comprising:
memory for storing each of the call centre agent calls and at least one call centre metric and/or audio metric relating to each of the call centre agent calls;
an audio analysis tool for analysing each of the call centre agent calls and extracting at least one audio feature metric from the call; and
a clustering tool for clustering each of the analysed calls according to the similarity of their extracted audio feature metric and their call centre metric.

In one embodiment of the invention there is provided a computer program product having program instructions for implementing the method according to the invention.

### Detailed Description of the Invention

The invention will now be more clearly understood from the following description of some embodiments thereof given by way of example only with reference to the accompanying drawings, in which:
Figure 1 is a flow diagram of the method according to the invention;
Figure 2 is a diagrammatic representation of the system according to the invention; and
Figure 3 is a screen shot illustrating the clustering of the calls.

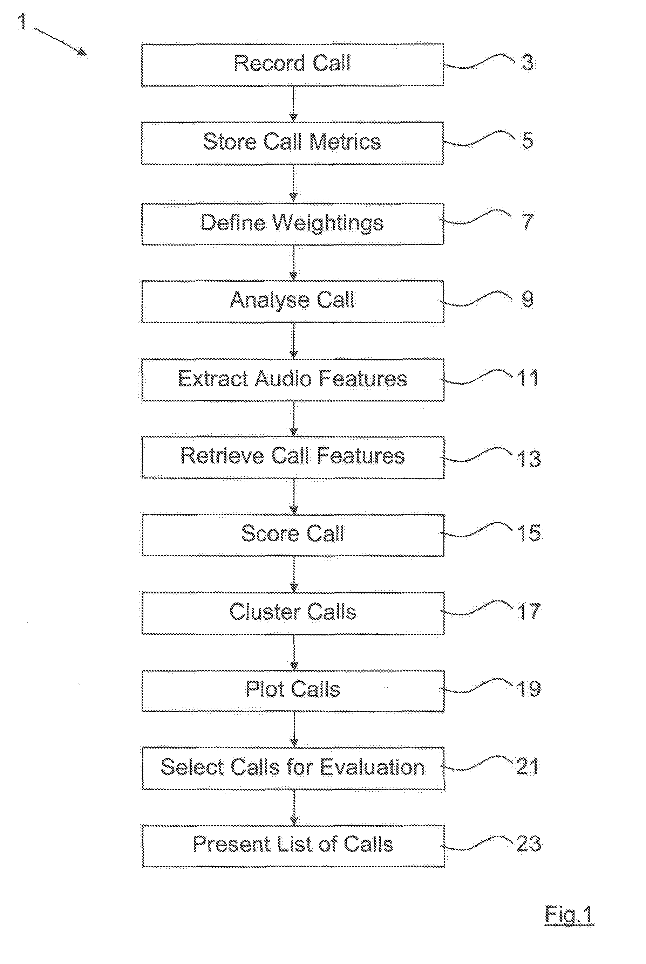

Referring to Figure 1, there is shown a flow diagram of the method, indicated generally by the reference numeral 1. The method comprises the initial step 3 of recording all of the calls of the agents. The entire call is recorded and the call is divided into two audio streams by an audio analysis tool, one stream for each party on the call so that the streams can be analysed individually. Various call centre metrics, including but not limited to, a call duration, a hold duration, a call time of day that the call occurred, a call waiting time, the number of breaks taken at the time of the call by the agent and how long the last break taken was are stored in memory in step 5.

In step 7, the call centre team leader defines the weightings for each of the control centre metrics and each of a plurality of audio feature metrics relevant to a call. According to one embodiment of the invention, the weightings may be fixed however In the present embodiment, the earl centre team leader will define the weightings for the calls when they are performing the evaluation. It will be understood that this definition of the weightings may be performed once at the outset of the analysis for all agents or alternatively the definition of the weightings may be carried out each time an evaluation is performed. The audio feature metrics include but are not limited to the volume distribution, a pitch distribution, a silences distribution, a speaker overlap measure a speaker dominance measure, a synchronised pitch and volume measure (which measures where both speaker's pitch or volume change at the same approximate time). The calls are then analysed in step 9 and in step 11, one or more of the audio feature metrics is extracted from the call recording.

In step 13, one or more of the call centre metrics is retrieved and the call is thereafter scored in step 15. According to one embodiment of the present invention, the "scoring" of the call entails determining the Euclidean distance of the call in relation to other calls (more specifically determining the Euclidean distance between each call and those calls that have been selected initially as a centroid of a cluster). This scoring entails effectively gathering all of the call features, determining their weightings and generating a numerical value that is representative of the calls characteristics. The Euclidean distance is one simple way of generating a numerical value representative of the calls characteristics. The number of dimensions used to create the Euclidean distance corresponds to the number of call features that are used to evaluate the calls. In one implementation, the scoring entails measuring the Euclidean distance between calls using each call feature as a dimension in Euclidean space. For example, a call with call duration of 60 seconds and with a hold time of 30 seconds and a call with duration of 120 seconds and hold time of 10 seconds would have a distance of SquareRoot[(60-120)² + (30-10)²] = 63.24. In addition, each of the values is first normalised so that it fits in the range [0,1] so as to stop a feature with large values dominating the distance measure.

Once the calls have been scored, the calls are then clustered together in one or more clusters in step 17. Preferably, more than one cluster will be created. The calls will be clustered according to the k-means algorithm with centroids selected according to the k-means++ algorithm. Once clustered, the calls are then plotted in step 19 about a centroid of the cluster with the Euclidean distance being used to plot the call around the centroid. The calls are clustered together based on the similarity of their features with other calls (both their audio feature and the call centre metric feature).

In step 21, after all of the calls have been analysed, scored and plotted, a selection of calls that are deemed suitable for evaluation are taken from the plotted calls. This may be achieved in a number of ways. In one embodiment, the call centre team leader can manually select one or more calls from the plotted calls by viewing the plot and retrieving a call for analysis by clicking on an icon on the plot representative of the call. By clicking on the icon, this will retrieve the audio file of the call for the team leader to evaluate. In a second embodiment, the call centre team leader can be provided with a list of one or more calls from the plotted calls. This may be achieved by the system selecting calls at random from the set of calls within a given range of distances or a specific distance from the centroid (or indeed by determining numerically without reference to the plot the calls with a score within a given range or a particular score itself).

In both embodiments, it will be possible to detect a call that is typical of the agent's performance and a call that is atypical of the agent's performance by the calls distance from the centroid. If it is desirable to obtain a call for evaluation that is typical of an agent's performance, the team leader or system will pick a call that is proximal to the centroid. If it is desirable to obtain a call for evaluation that is atypical of the agent's performance, the team leader or the system will select a call that is relatively distant from the centroid. The fact that the call is distant from the centroid may be considered to be indicative that the call is not typical of the call centre agents usual manner of handling a call, however, the fact that the call is distant from the centroid may also be considered to be indicative that the call is atypical of the normal displayed call characteristics generally. This may be a pointer to a problem that needs to be addressed. If the system has selected the calls on behalf of the team leader, a list of one or more calls for evaluation can be presented to the team leader in step 23. The list may indicate whether or not the call is considered typical or atypical, The list may contain a mixture of typical and atypical calls if desired.

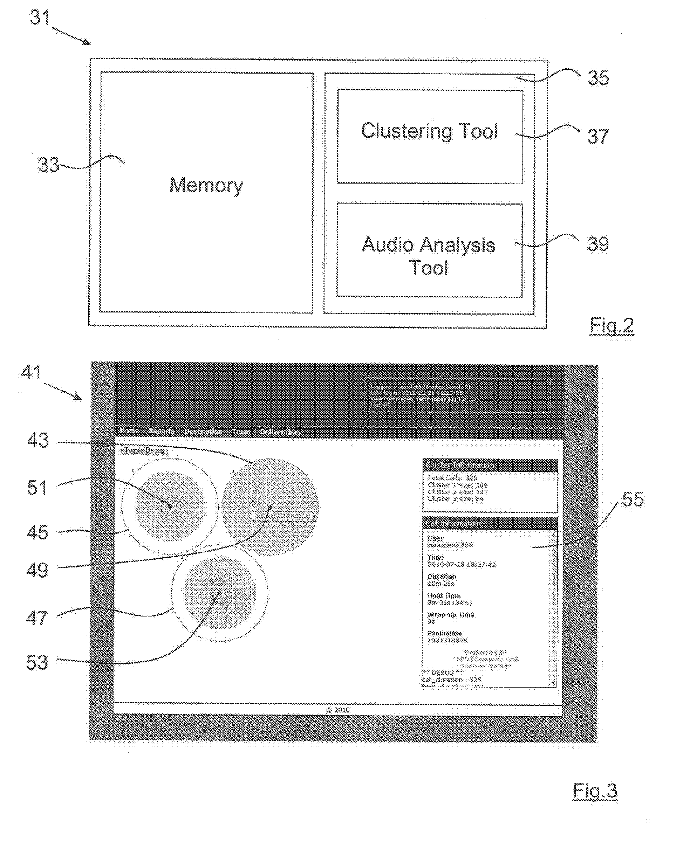

Referring to Figure 2, there is shown In block diagram form a diagrammatic representation of the system according to the invention, indicated generally by the reference numeral 31. The system 31 comprises both a hardware component and a software component. The hardware component comprises a memory 33 in which the calls, call centre metrics and extracted audio features are stored. The hardware component further comprises a processor 35 for processing the calls and the data. The software component comprises an audio analysis tool 37 and a clustering tool 39. The audio analysis tool 37 is used to process the recorded calls and determine one or more audio feature metrics from the analysis. These audio feature metrics are then used to score the calls and determine the Euclidean distance of the calls from a centroid determined by the clustering tool 39. The clustering tool 39 clusters all of the calls into one or more clusters about a centroid and uses the Euclidean distance to plot the calls about the centroid. As mentioned above, the clustering tool 39 uses the k-means++ algorithm to cluster the calls.

Other clustering techniques which could be employed include k-medoids (which is similar to k-means but which uses an actual data point as a centroid rather than a mean of surrounding calls) however this is typically significantly slower than k-means for large data sets.

Another possibility are Self-Organising maps which are based on Artificial Neural Networks and which partition the data according to its underlying statistical properties. However, there is no real way of predefining the number of groups such an approach should produce and no real notion of a "centroid". Therefore, an estimate of a centroid would have to be generated by calculating the distance between the most extreme points in the cluster and finding a middle point

Instead of using a Euclidean distance, other distance measures that could be used, including, for example Manhattan. Jaccard, Hamming, and **Kullback-Leibler** distance. It is also possible to create custom distance measures for any given problem if so desired.

Referring to Figure 3. there is shown a screenshot, indicated generally by the reference numeral 41, comprising a plot of the calls for a particular agent in a call centre over a given period of time. The calls are platted in three separate graphs or groups 43,45 and 47 around three separate centroids 49, 51 and 53 respectively, however it will be understood that the number of centroids and by extension the number of groups generated is largely arbitrary and more or less than three plots could be provided. An optimum number of groups can be established by the system automatically using the Bayesian Information Criterion to measure the coherence of the generated groups and increasing the value of k incrementally until no further improvement is acheived.. *[*There is further provided information about the agent, the calls used to create the plot and a specific call selected at that moment in time in user panel 55 of the user interface.

There are several other advantageous features and aspects of the present invention. Preferably, the method and system will be implemented through a database-backed web-based application and the user interface shown in Figure 3 can be provided within an internet browser. The calls for a single user or indeed a group of users In the can centre may be plotted and the weightings may be adjusted if desired by the user through the user interface. It is envisaged that the processing of the calls will be relatively onerous and therefore a significant amount of processing power may be required to process all of the calls. It may therefore be advantageous to carry out some or all of the processing and indeed some or all of the plotting in the cloud or on a remote proprietary or non-proprietary processing farm. The audio analysis tool and the clustering tool are in fact two distinct components that can be located on the same or on separate machines. It is envisaged that In many instances, it will be preferable to process the calls with the audio analysis tool remotely and then cluster the data locally.

it is envisaged that a call centre team leader will be able to bookmark calls that are of interest to them and to the evaluation of the call centre agent's performance. These bookmarked calls can then subsequently be compared to other calls that have been analysed to retrieve similar calls from the clustered analysed calls. In this way, if a particular behavioral pattern is being analysed, a check may be made subsequently tod see whether the behavioral pattern has continued or whether it has ceased. It is further envisaged that it will be possible for the call centre team leader to carry out an analysis over a given time period and they will be able to select a range of dates within which to perform their analysis. This will enable them to ensure that they do not retrieve previously monitored calls and will enable them to carry out the most relevant evaluation of the call centre agent's performance.

By using the method and system according to the present invention, during testing it has been found that the accuracy or hit rate of identifying typical calls and atypical calls is approximately 79%. Using the previously known techniques of selecting the calls at random, the accuracy/hit rate of identifying the desired call was of the order of 50% (assuming a sample containing a 50/50 split of typical/atypical calls). Accordingly, the call centre team leader can reduce the amount of time that they must spend searching for typical or atypical calls to evaluate by approximately one third. This represents a significant saving in time and resources over the known methods.

It will be understood that the method according to the present invention will be performed largely in software and therefore the present invention extends also to computer programs, on or in a carrier, comprising program instructions for causing a computer to carry out the method. The computer program may be in source code format, object code format or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM or a hardware circuit, In certain circumstances, a transmissible carrier such as a carrier signal when transmitted either wirelessly and/or through wire and/or cable could carry the computer program in which cases the wire and/or cable constitute the carrier.

It will be further evident that the present invention will be performed on more than one (processing) machine and even those parts of the method and system described in relation to a single processor or a single computer or machine could In fact be performed over two, three or more machines with certain parts of the computer-implemented method being performed by one device and other parts of the computer-implemented method being performed by another device. The devices may be part of a LAN, WLAN or could be connected together over a communications network including but not limited to the internet.

Many of the method steps could be performed "in the cloud", meaning that remotely located processing power may be utilised to process certain method steps of the present invention. It will be further understood that many of the method steps may not be performed in the cloud but could still be performed remotely, by which it is meant that the method steps could be performed either on a separate machine in the same locality or jurisdiction or indeed on a separate machine or machines In several remote jurisdictions. Steps performed In the cloud" may be performed in the same or in a different jurisdiction to the other steps and indeed the processing farm itself could be located in more than one jurisdiction. The present invention and claims are intended to cover those instances where the method is performed across two or more machines located in one or more jurisdiction.

In this specification the terms "comprise, comprises, comprised and comprising- and the terms "Include, includes, included and include are all deemed totally interchangeable and should be afforded the widest possible interpretation.

The invention is in no way limited to the embodiment hereinbefore described but may be varied in both construction and detail within the scope of the specification.

## Claims

1. A method of selecting a call centre agent call for evaluation comprising the steps of:
recording each of the calls handled by the call centre agent;
analysing each of the calls handled by the call centre agent and extracting at least one audio feature metric from the call;
retrieving at least one call centre metric relating to each of the calls;
scoring each of the analysed calls according to both their audio feature metric and their call centre metric in relation to other calls;
clustering the scored analysed calls; and
from the clustered scored analysed calls, selecting at least one of the calls suitable for evaluation.

2. A method as claimed in claim 1 In which the stop of selecting at least one of the calls suitable for evaluation comprises selecting a call from the clustered scored analysed calls that is typical of the agents calls.

3. A method as claimed in claim 1 or 2 in which the step of selecting at least one of the calls suitable for evaluation comprises selecting a call from the clustered scored analysed calls that is atypical of the agent's calls.

4. A method as claimed in any preceding claim in which the step of scoring each of the analysed calls comprises applying a weighting to each of the audio feature metric and the call centre metric.

5. A method as claimed in claim 4 comprising the initial step of setting the weightings for the audio feature metric and the call centre metric.

6. A method as claimed in any preceding claim in which the step of scoring each of the analysed calls comprises calculating a Euclidean distance for each of the calls.

7. A method as claimed in any preceding claim in which the step of clustering the scored analysed calls comprises clustering the scored analysed calls according to the k-means algorithm with centroids selected according to the k-means++ algorithm.

8. A method as claimed in any preceding claim comprising the additional intermediate step of plotting the clustered scored analysed calls and displaying the plotted clustered scored analysed calls.

9. A method as claimed in claim 8 in which the clustered scored analysed calls are plotted at their Euclidean distance about a centroid.

10. A method as claimed in any preceding claim in which the calls are clustered into three or more clusters.

11. A method as claimed In any preceding claim comprising the steps of bookmarking a first call and thereafter retrieving a second call having a similar audio feature metric and call centre metric as the first call.

12. A method as claimed in any preceding claim In which the step of extracting at least one audio feature metrics from the call comprises extracting one or more of a volume distribution, a pitch distribution, a silences distribution, a speaker overlap measure, a speaker dominance measure, a synchronised pitch and volume measure.

13. A method as claimed in any preceding claim in which the step of retrieving at least one call centre metric relating to the call comprises retrieving one or more of a call duration, a hold duration, a call time of day ,a call waiting time, the number of breaks taken at the time of the call by the agent and how long the last break taken was.

14. A system for selecting a call centre agent call for evaluation comprising:
memory for storing each of the call centre agent calls and at least one call centre metric and/or audio metric relating to each of the call centre agent calls;
an audio analysis tool for analysing each of the call centre agent calls and extracting at least one audio feature metric from the call, and
a clustering tool for clustering each of the analysed calls According to the similarity of their extracted audio feature metric and their call centre metric.

15. A computer program product having program instructions for implementing the method according to any of claims 1 to 13.
